Europäisches Patentamt

European Patent Office

Office européen des brevets

(19)

(11) **EP 0 592 171 B1**

(12) **EUROPEAN PATENT SPECIFICATION**

(45) Date of publication and mention
of the grant of the patent:
**11.03.1998 Bulletin 1998/11**

(51) Int Cl.6: **G01P 1/00**, G01C 19/56

(21) Application number: **93307867.7**

(22) Date of filing: **04.10.1993**

(54) **Method of and apparatus for compensating for material instabilities in piezoelectric materials**

Verfahren und Vorrichtung zur Kompensation von Materialinstabilitäten in piezoelektrischem Material

Procédé et dispositif pour la compensation d'instabilités matérielles dans des matériaux piézoélectriques

(84) Designated Contracting States:
**BE DE ES FR GB IT NL**

(30) Priority: **06.10.1992 GB 9220977**

(43) Date of publication of application:
**13.04.1994 Bulletin 1994/15**

(73) Proprietor: **BRITISH AEROSPACE PUBLIC LIMITED COMPANY**
**Farnborough, Hants. GU14 6YU (GB)**

(72) Inventors:
• **Varnham, Malcolm P.,**
**British Aerospace Systems**
**Plymouth, Devon PL6 6DE (GB)**
• **McInnes, James**
**Stevenage, Hertfordshire SG1 2NJ (GB)**

(74) Representative: **Rooney, Paul Blaise et al**
**British Aerospace plc,**
**Company Headquarters,**
**Corporate IPR Department,**
**Lancaster House,**
**P.O. Box 87,**
**Farnborough Aerospace Centre**
**Farnborough, Hants. GU14 6YU (GB)**

(56) References cited:
**EP-A- 0 153 189**        **EP-A- 0 492 739**
**GB-A- 2 061 502**

## Description

The present invention relates to a method of and apparatus for compensating for material instabilities in piezoelectric materials and relates particularly, but not exclusively, to compensation for "ageing" in rotation rate sensors utilising Lead Zirconate Titanate (PZT).

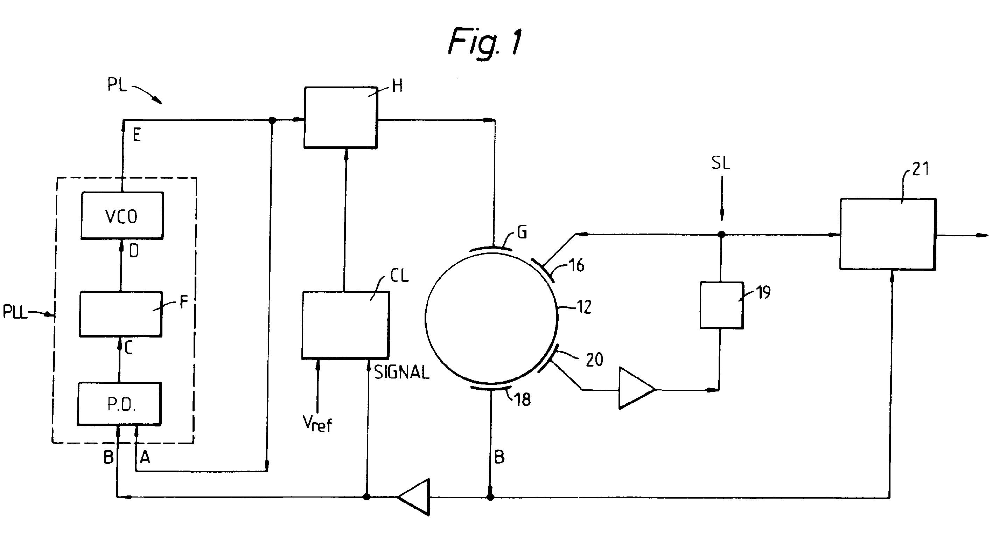

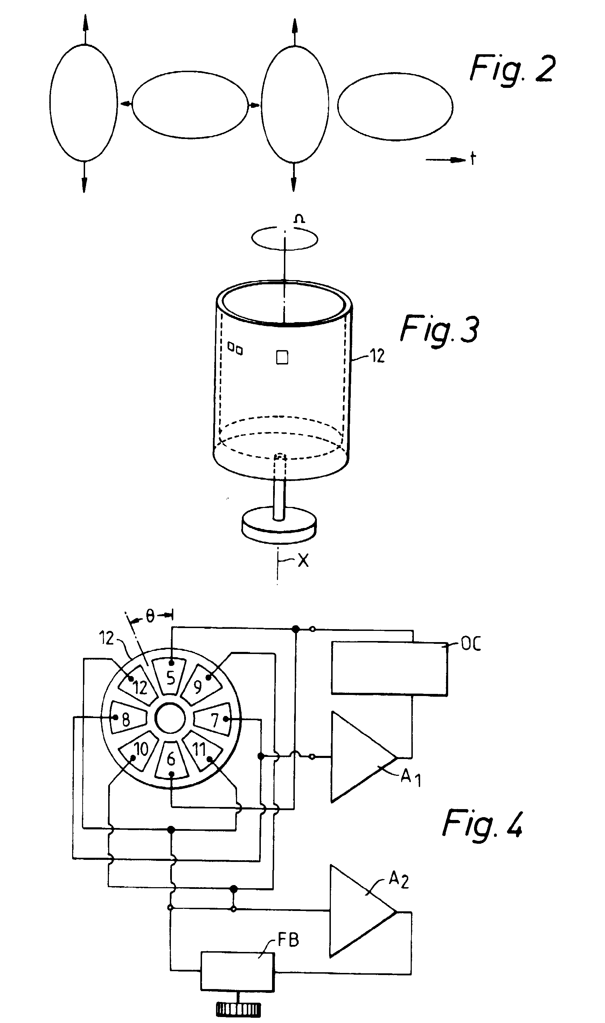

Figure 1 is a system diagram for a conventional single axis rate sensor of the type described in GB2061502 to R M Langdon and GB 2154739 to J S Burdess. The cylinder is driven into resonance by applying an oscillating electric signal to the drive transducers. The vibration pattern, viewed from the top, of the resonant mode is shown in Figure 2. It will be seen that there are antinodes of maximum radial vibration and nodes of minimum radial vibration present. The primary loop control maintains this resonance by ensuring a 90 degree phase shift between the primary drive transducer and primary pick-off transducer. When the rate sensor is rotated, the resonant mode rotates with respect to the cylinder, and a signal can be detected on the secondary pick-off transducer. This signal is amplified and fed back to the secondary drive transducer in order to null it to zero. The strength of the nulling signal is proportional to rotation rate. The signal is demodulated and outputted as a dc. rate signal.

It should be noted that the vibration pattern can have a different shape to that shown in Figure 2. However, the vibration pattern must have nodes and antinodes occurring cylindrically around the perimeter of the cylinder. The cylinder does not have to be driven exactly at resonance - but in practice it is desirable so to do. The resonant body neither has to be circular, nor cylindrical, indeed hemispheres and rings can be used. However, it is desirable that the oscillating modes seen by primary and secondary electronic circuits (referred to as the primary and secondary resonances) have the same, or nearly the same, resonant frequency.

GB2061502 discloses a metal conventional cylinder 12, closed at one end and supported by a stem, which is driven into resonance using piezoelectric elements stuck onto the metal cylinder as shown in Figure 3. Piezoelectric elements are also used to pick-off the movements.

GB 2154739 describes a similar conventional device of unitary construction made from piezoelectric material where the drive and pick-off transducers are formed by polarising the material between electrodes regions as shown in Figure 4. The device includes two charge amplifiers $A_1$ and $A_2$ an oscillator circuit and active gain control system OC, and a feed back system FB.

Both the above mentioned patents describe similar electronic circuits to that shown in Figure 1. From Figure 1, it can be seen that the phase locked loop PLL comprises a phase detector PD, low pass filter F and a voltage controlled oscillator VCO. The VCO output is connected to both the primary drive electrode G via a gain control element H and the reference input on the phase detector PD.

The characteristics of the phase detector PD is that it outputs a signal C which is proportional to the phase difference between the signals A and B at its inputs. The phase detector PD used here has Zero output when the inputs are in quadrature, i.e.: it is a quadrature phase detector.

When the primary loop PL is locked, the phase detector PD input signals A and B are in quadrature, and thus the cylinder 12 is on resonance. If the phase of the signal at B alters, this is sensed by the phase detector, which outputs a correction signal C which is filtered and used to control the phase of the VCO signal.

Unfortunately, piezoelectric materials such as PZT have a large change in their quality factor Q over temperature. This implies that the amplitude of the resonant mode for constant primary drive signal will vary proportionally to Q and will therefore vary with temperature.

The system in Figure 1 avoids the above mentioned problem by utilising a gain control circuit in the primary loop PL, which compares the amplitude of the primary pick-off signal (B) to an external reference voltage $V_{ref}$ via a controller CL in order to maintain the primary pick - off signal at constant amplitude. This helps to stabilise the dependence of the scale factor of the rate sensor with temperature by reducing the dependence on Q.

A secondary drive transducer 16 and primary and secondary pick-off transducers 18, 20 form part of a secondary loop SL together with a low pass filter 19 and a demodulator 21.

Piezoelectric ceramics contain many small granules, each containing domains in which the electric dipoles are aligned. The grains are randomly orientated, so the net electric dipole is zero - i.e.: the bulk material is not piezoelectric.

The material is made piezoelectric by poling, in which a high electrical field is applied to the material at elevated temperatures. The process aligns the dipoles in the direction of the electric field and the dipoles remain in this direction after the field is removed. Such a technique is disclosed in, for example, ANSI/IEEE std 176-1987 "IEEE standard on Piezoelectricity" and in Cady, W.G. Piezoelectricity, by Dover Publications, New York, 1964.

Unfortunately, most piezoelectric ceramic materials gradually become less piezoelectric with time, that is, they age. It has been found that the ageing process is typically logarithmic with time - the material ages by the same amount in the first day after poling as in the next ten days, and by the same amount in the next one hundred days, and so on.

In addition to ageing, the piezoelectric parameters also display thermal hysteresis. Worse than this, the parameter values do not necessarily return to the same value after undergoing a temperature cycle. The effect can be characterised by measuring and plotting the parameter variations over temperature cycles, concentrating on the often slow and incomplete recovery of the parameter value with time.

Piezoelectric parameter variations will have a significant effect on rotation rate sensor performance. For example, changes in the piezoelectric properties of the material will vary both the Direct Piezoelectric effect (charge produced when the material is under applied mechanical stress,) and the Reverse Piezoelectric effect (mechanical strain produced under applied electric field). Thus the "effective input and output gains" of devices fabricated from the piezoelectric material will vary.

In addition to the above, if the frequency of parts fabricated from the material, and the capacitance of electrodes vary, then this too can alter the effective input and output gains.

In particular, these parameter variations will cause a change in the scale factor (or sensitivity, i.e.: output signal for a given applied rate of rotation) of the rotation rate sensor.

Further, the scale factor of the rate sensor is also a direct function of the frequency at which the sensing element (i.e.: the cylinder) vibrates. The natural frequency of the cylinder changes with time and temperature owing to material parameter variations. Hence, the rate sensor scale factor will vary as a direct result.

As described above, the rate sensor can be designed with a circuit (Figure 1) to eliminate the variations in scale factor caused by the primary output signal varying with temperature. However, this loop is primarily designed to counteract changes in the Quality Factor Q with temperature and time.

Unfortunately, the loop does not cope with all the variation in piezoelectric parameters. As a result of this, the scale factor of the rate sensor will age with time and display thermal hysteresis. These variations can contribute from 5% to 15% variation for a finished product. These are large variations, especially when attributed to a single source - i.e.: the material.

In summary, rate sensors utilising vibrating cylinders made from piezoelectric material show ageing and thermal instabilities in their properties. These result in unacceptably high variations in the scale factor of the rate sensors. Variations in rate sensors utilising piezoelectric transducers stuck onto metallic vibrating pieceparts (such as described in GB2061302) are predicted to show analogous effects. Variations in other sensors whose sensitivities are dependent on the piezoelectric properties of the material are also predicted to show analogous effects.

There is thus a need to reduce and possibly eliminate the problems of ageing and thermal instabilities in items made from or incorporating piezoelectric materials.

According to one aspect of the present invention there is provided a rate sensor assembly for detecting rotational movement about an axis X including a cylinder incorporating piezoelectric material, which cylinder is positioned about said axis, primary and secondary drive transducers for applying radial vibrations to said cylinder, primary and secondary pick-off transducers for detecting the presence of vibrations induced in said cylinder, a primary control loop for receiving a signal from the primary pick-off transducer and maintaining resonance by generating a ninety degree phase shift between the primary drive transducer and the primary pick-off transducer, and a secondary control loop for receiving a signal from the secondary pick-off transducer indicative of rotation thereof and for directing said signal to the secondary drive transducer so as to null it to zero, characterised by including a temperature sensor for sensing an operating temperature of the cylinder and generating an operating temperature signal (To), a controller operable to receive the operating temperature signal and the resonant frequency signal from the primary pick-off transducer and adjust a reference signal, and a gain control circuit operable to receive the reference signal and maintain either the primary pick-off signal or the primary drive signal at a value defined by the reference signal to compensate for parameter variations in the cylinder piezoelectric material.

Preferably the cylinder piezoelectric material is Lead Zirconate Titanata (PZT) and wherein the parameter variations to be compensated for include ageing.

Conveniently the gain control circuit is located in the primary control loop, which gain control circuit comprises a gain control device and an amplitude controller operable to compare the amplitude of the primary pick-off signal with a reference voltage ($V_{ref}$) and apply a correction signal CS to the gain control device.

Advantageously the controller is operable to receive the operating temperature signal (To) and to monitor the resonant frequency of the cylinder and use them to provide an open loop compensation of the reference amplitude of the primary pick-off amplitude.

Preferably the controller includes a frequency difference meter operable to provide an output voltage V2 proportional to the difference in the cylinder frequency and the original set value of the cylinder frequency at ambient temperature.

Conveniently the gain control device is located in the primary control loop 22, and wherein the controller is connected between the temperature sensor and the gain control device which controller is operable to monitor the resonant frequency of the cylinder and adjust the input drive amplitude by reference to the frequency and temperature.

Preferably the primary control loop includes a phase locked loop having a phase detector configured to operating at quadrature, a low pass filter and a voltage controlled oscillator.

According to another aspect of the present invention there is provided a method of compensating for parameter variations in piezoelectric material forming at least part of a cylinder of a rate sensor assembly for detecting rotational movement about an axis (X) on which the cylinder is positioned, characterised by the steps of sensing the operating temperature (To) of the cylinder, sensing the resonant frequency (B) of the cylinder, delivering the measured temperature (To) and frequency (B) to a controller, adjusting a reference signal (Vref), and maintaining either a primary pick-off signal or a primary drive signal at a value defined by the reference signal to compensate for said parameter variations.

Preferably the controller provides open loop compensation of the reference amplitude of the primary pick-off amplitude.

Alternatively the controller adjusts the input drive amplitude to the cylinder by reference to the frequency (B) and temperature (To).

The present invention will now be more particularly described by way of example only with reference to the accompanying drawings, in which:

Figure 1 is a conventional schematic diagram for a single-axis rate sensor;
Figure 2 is a diagrammatic representation of the vibration pattern, viewed from the top of the resonant mode of the vibrating portion of the conventional rate sensor shown in Figure 1;
Figure 3 illustrates a conventional vibrating cylinder of the type incorporated in the prior art arrangement and illustrates the electrode position thereon,
Figure 4 illustrates a similar conventional device of unitary construction made from piezoelectric material where the drive and pick-off transducers are formed by polarising the material between electrode regions,
Figures 5 and 6 illustrate schematically a rate sensor according to various different embodiments of the present invention,
Figures 7 and 8 show alternatives to the Figures 5 and 6 embodiments, not according to the present invention, and
Figure 9 is a block diagram showing one example implementation of the controllers and gain control blocks for the present invention.

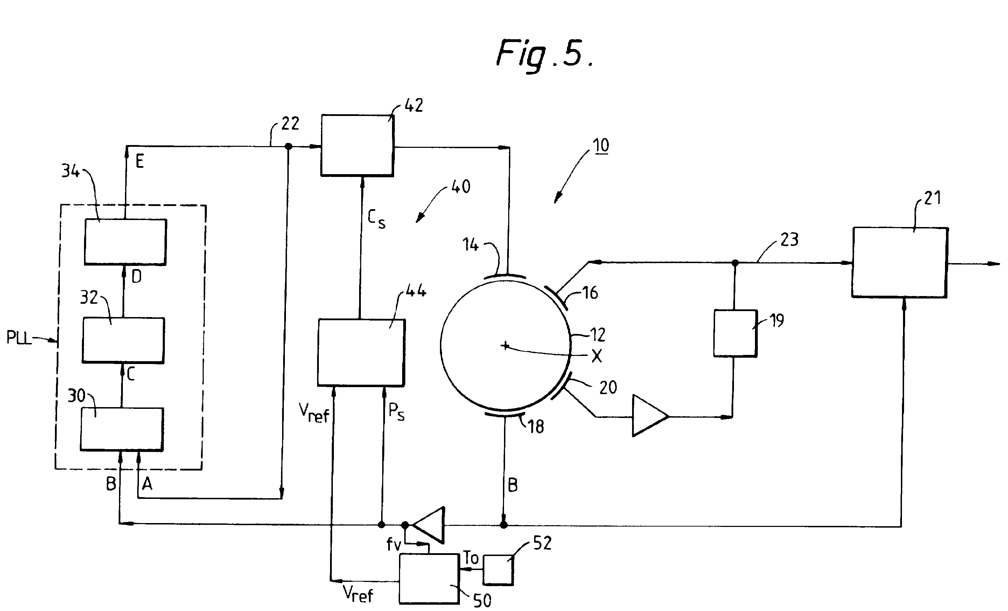

Referring now to the Figures 5, 6 and 9 in general, a vibrating rate sensor 10 according to one embodiment of the present invention for detecting rotational movement about an axis includes a cylinder 12 positioned about said axis x, primary and secondary drive transducers 14, 16 for applying radial vibration to said cylinder, primary and secondary pick-off transducers 18,20 for detecting the presence of vibration induced in said cylinder 12 and primary and secondary control loops 22, 23. The primary control loop is provided for receiving a signal from the primary pick-off transducer 18 and for maintaining resonance of the structure by generating a 90 degree phase shift between the primary drive transducer 14 and the primary pick-off transducer 18.

The secondary control loop 23 is provided for receiving a signal from the secondary pick-off transducer 20 which is indicative of rotation of the structure. This signal is directed to the secondary drive transducer so as to null it to zero. The primary control loop 22 may include a phase locked loop (PLL) having a phase detector 30 configured to operate at quadrature, a low pass filter 32 and a voltage controlled oscillator 34. The voltage control oscillator 34 provides an output signal for driving the primary drive transducer 14 and a reference signal (A) for returning to phase detector 30 to form a portion of the phase locked loop. The operation of such primary drive circuits is well known in the art and is therefore not described in further detail herein.

Reference may, however, be made to the above mentioned Patents and also to the Applicants co-pending British Application No.9207886.4. This arrangement overcomes the problems associated with variations with temperature of the quality factor Q of piezoelectric materials by incorporating a gain control circuit 40 in the primary loop. The circuit 40 comprises a gain control device 42 and an amplitude controller 44. The controller compares the amplitude of the primary pick-off signal Ps with a reference voltage $V_{ref}$ and applies a correction signal Cs to the gain control device (42) in order to maintain the primary pick-off signal at constant amplitude. This helps to stabilise the dependence of the scale factor of the rate sensor with temperature.

The present invention includes a temperature sensor (52) for sensing an operating temperature of the cylinder (12) and generating an operating temperature signal To. This signal To is received by a controller (50, 50a) which monitors the resonant frequency of the cylinder and the operating temperature To and uses these to provide an open loop compensation of the reference amplitude of the primary pick-off amplitude. The controller (50,50a) may be connected between the temperature sensor (52) and the gain control device (42).

The controller (50, 50a) combines signals from the temperature sensor (52), a voltage reference source $V_{ref}$ and a measure of the frequency variation fv so as to derive an output signal V4 proportional to the desired primary pick-off amplitude from the cylinder.

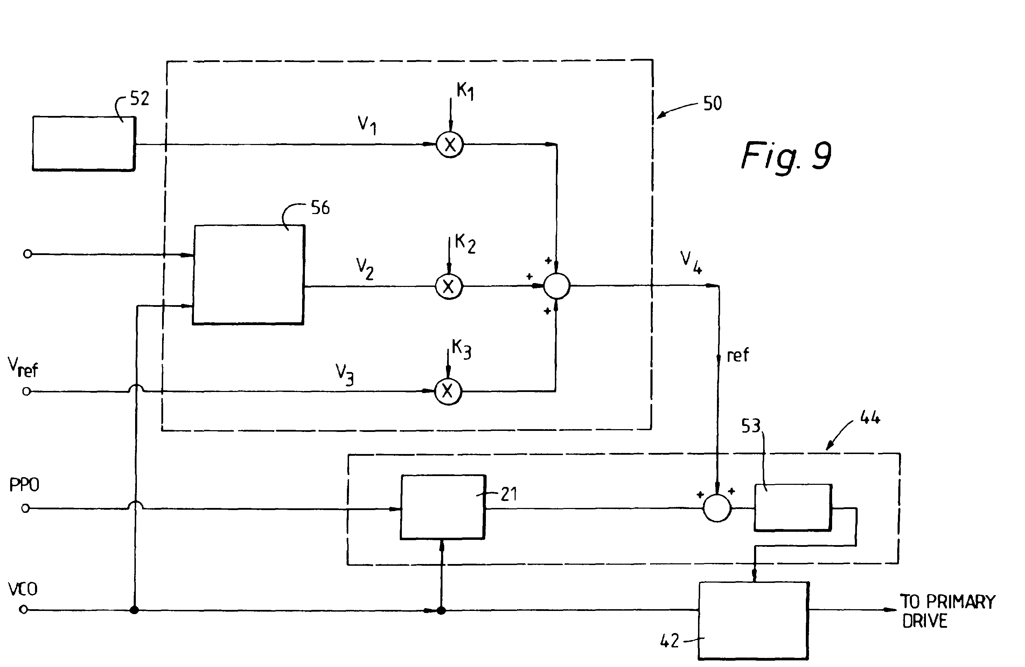

The temperature sensor (52) may be any commercially available temperature sensor where the output voltage V1 is proportional to temperature. For this example, V1 is scaled in volts/°C. The accuracy of the sensor needs to be, typically 2°C. The details of controller (50) are shown in more detail in Figure 9 in which it will be seen that controller (50) includes a frequency difference meter (56) in the form of a circuit which provides an output voltage V2 proportional to the difference in the cylinder frequency and the original set value of the cylinder frequency at ambient. The amplitude controller 44 includes a shaping device (53). For this example, V2 is scaled in Volts Hz. One implementation is to measure the difference in frequencies between an accurate reference frequency $F_{ref}$ and the frequency which is supplied to the gyro. The reference frequency might also be supplied at a lower or higher integer multiple of the cylinder frequency and scale accordingly in the frequency meter (56). The accuracy of the frequency Difference Meter is required to be about 0.2%.

$V_{ref}$ is a reference voltage, possibly derived from a proprietary band gap semiconductor reference. Again, for this example, $V_{ref}$ is 1 volt, and we have $V3=V_{ref}$.

These signals are combined to give a voltage V4, where:

$$V4 = K1.\ V1 + K2.\ V2 + K3.\ V3 \qquad (1)$$

Typical values for the coefficients are:

$$K1 = -2 \times 10^{-3}$$

$$K2 = 5.5 \times 10^{-4}$$

$$K3 = 1$$

It must be stressed that the above implementation is an example only. In practice more convenient scaling of V1, V2 and V3 could be chosen together with corresponding values of K1, K2 and K3.

In addition, there are many ways of practically implementing the controller. However, all these ways will have the common feature in that the resulting equations will be similar to the above.

The purpose of the controller (50) is to provide a control signal to the gain control element in order to force the primary pick-off amplitude to V4.

One possible implementation is to demodulate the primary pick-off signal with respect to the VCO signal in order to measure the amplitude of the primary pick-off signal. This is then compared with V4, and the error signal fed into a shaping circuit which provides the necessary control signal to the gain control element.

This implementation requires a knowledge of control theory in order to ensure that loop stability and adequate accuracy is obtained. However, a possible implementation is to utilise a very slow integrator in the shaping circuit in order to avoid interaction of this amplitude control loop with the other control loops.

The purpose of the gain control element is to adjust the amplitude of the VCO with respect to the control input from the first controller. Various implementations are possible, however, one possible implementation is to use a commercially available automatic gain control integrated circuit.

The general scheme for a closed - loop scheme is shown in Figure 5.

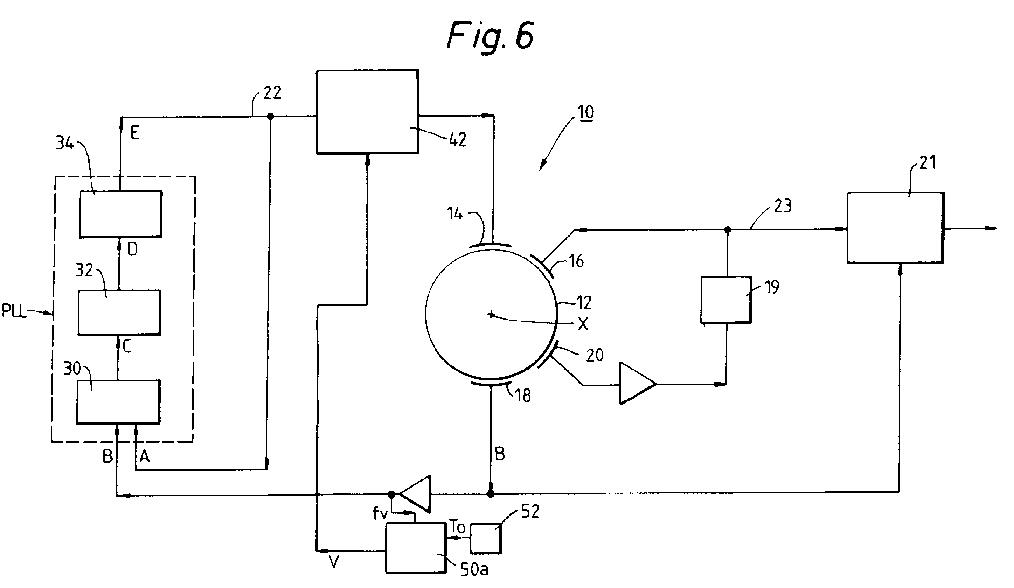

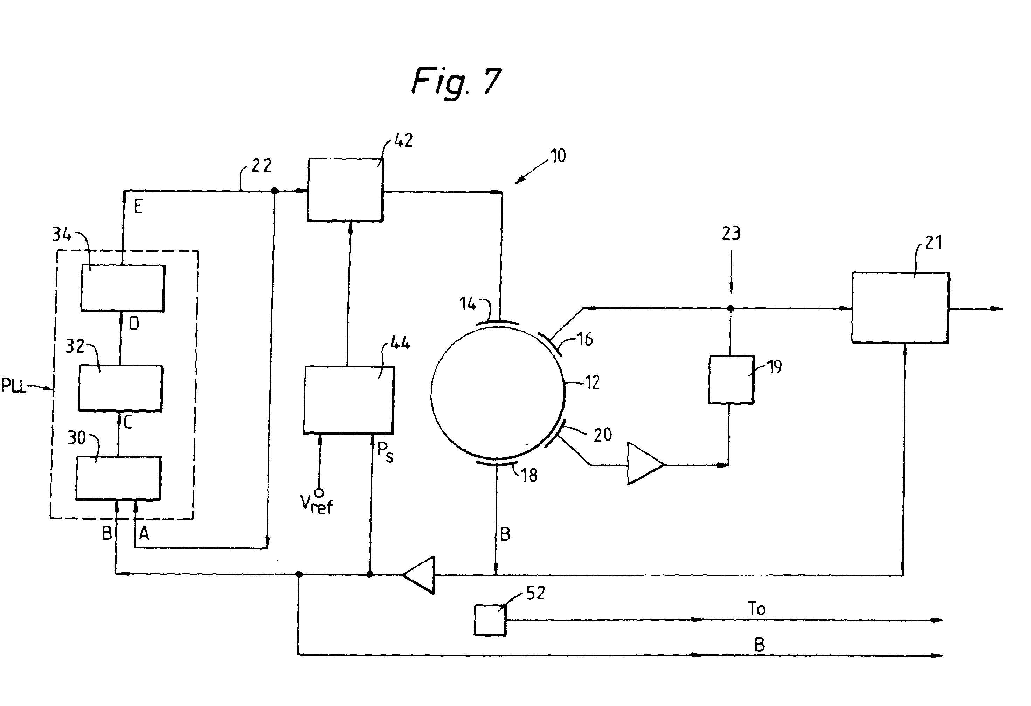

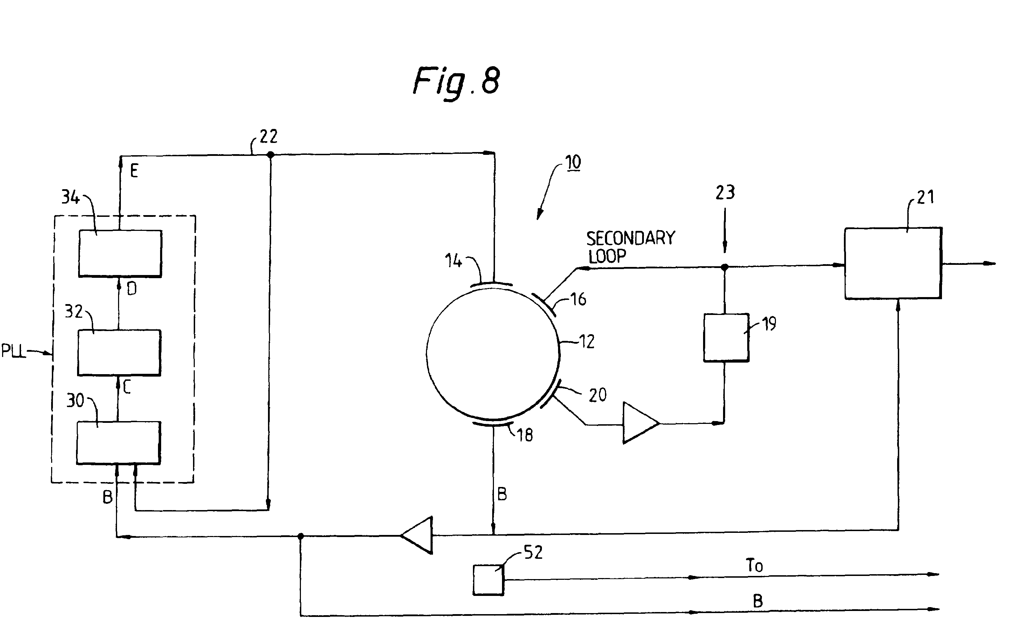

The general model for an open-loop scheme is shown in Figure 6 where the sensing element is driven into oscillation by an external drive circuit. The drive amplitude is adjusted by reference to the frequency and temperature. The scheme is open loop because the primary pick-off amplitude is not stabilised. Such a sensor will have a predictable variation with temperature arising from Q variations. These could be externally compensated for by measuring the amplitude of the primary pick-off signal. Figures 7 & 8 show open and closed loop schemes similar to the above, but where the compensation for variations in piezoelectric parameters is carried out externally, not according to the invention, by, say, a microprocessor (not shown). The algorithms required are well understood in the art and are therefore not described herein.

The basic scheme could be added to any of the combination of arrangements illustrated in the Applicants co-pending application No. 9207886.4

**Claims**

1. A rate sensor assembly for detecting rotational movement about an axis (X) including a cylinder (12) incorporating piezoelectric material, which cylinder is positioned about said axis, primary and secondary drive transducers (14, 16) for applying radial vibrations to said cylinder (12), primary and secondary pick-off transducers (18, 20) for detecting the presence of vibrations induced in said cylinder, a primary control loop for receiving a signal from the primary pick-off transducer (18) and maintaining resonance by generating a ninety degree phase shift between the primary drive transducer (14), and the primary pick-off transducer (18), and a secondary control loop for receiving a signal from the secondary pick-off transducer (20) indicative of rotation thereof and for directing said signal to the secondary drive transducer (16) so as to null it to zero, characterised by including a temperature sensor (52) for sensing an operating temperature of the cylinder and generating an operating temperature signal (To), a controller (50,50a) operable to receive the operating temperature signal and the resonant frequency signal from the primary pick-off transducer (18) and adjust a reference signal (Vref), and a gain control circuit (40,42) operable to receive the reference signal (Vref) and maintain either the primary pick-off signal or the primary drive signal at a value defined by the reference signal (Vref) to compensate for parameter variations in the cylinder piezoelectric material.

2. A rate sensor assembly according to claim 1, wherein the cylinder piezoelectric material is Lead Zirconate Titanate (PZT) and wherein the parameter variations to be compensated for include ageing.

3. A rate sensor assembly according to claim 1 or claim 2, wherein the gain control circuit (40) is located in the primary control loop (22), which gain control circuit (40) comprises a gain control device (42) and an amplitude controller (44) operable to compare the amplitude of the primary pick-off signal with a reference voltage ($V_{ref}$) and apply a correction signal (CS) to the gain control device (42).

4. A rate sensor assembly according to claim 3, wherein the controller (50) is operable to receive the operating temperature signal (To) and to monitor the resonant frequency of the cylinder (12), and use them to provide an open loop compensation of the reference amplitude of the primary pick-off amplitude.

5. A rate sensor assembly according to claim 4, wherein the controller (50) includes a frequency difference meter (56) operable to provide an output voltage V2 proportional to the difference in the cylinder frequency and the original set value of the cylinder frequency at ambient temperature.

6. A rate sensor assembly according to claim 1 or claim 2, wherein the gain control device (42) is located in the primary control loop (22), and wherein the controller (50a) is connected between the temperature sensor (52) and the gain control device (42), which controller (50a) is operable to monitor the resonant frequency of the cylinder 12 and adjust the input drive amplitude by reference to the frequency and temperature.

7. A rate sensor assembly according to any one of claims 1 to 6, wherein the primary control loop (22) includes a phase locked loop (PLL) having a phase detector (30) configured to operate at quadrature, a low pass filter (32) and a voltage controlled oscillator (34).

8. A method of compensating for parameter variations in piezoelectric material forming at least part of a cylinder (12) of a rate sensor assembly (10) for detecting rotational movement about an axis (X) on which the cylinder (12) is positioned, characterised by including the steps of sensing the operating temperature (To) of the cylinder (12), sensing the resonant frequency (B) of the cylinder (12), delivering the measured temperature (To) and frequency (B) to a controller (50, 50a), adjusting a reference signal (Vref), and maintaining either a primary pick-off signal or a primary drive signal at a value defined by the reference signal (Vref) to compensate for said parameter variations.

9. A method according to claim 8, in which the controller (50a) provides open loop compensation of the reference amplitude of the primary pick-off amplitude.

10. A method according to claim 8, in which the controller (50a) adjusts the input drive amplitude to the cylinder (12) by reference to the frequency (B) and temperature (To).

## Patentansprüche

1. Drehzahlsensor-Aufbau zur Erfassung der Drehbewegung um eine Achse (X) mit einem Zylinder (12), der piezoelektrisches Material enthält und um diese Achse herum angeordnet ist, mit Primär- und Sekundär-Antriebswandlern (14, 16), die dem Zylinder (12) radiale Vibrationen aufprägen, mit Primär- und Sekundär-Abnahmewandlern (18, 20), die das Vorhandensein von Vibrationen erfassen, die in den Zylindern induziert sind, mit einer Primär-Steuerschleife zum Empfang eines Signals vom Primär-Abnahmewandler (18) und zur Aufrechterhaltung einer Resonanz durch Erzeugung einer 90°-Phasenverschiebung zwischen dem Primär-Antriebswandler (14) und dem Primär-Abnahmewandler (18) und mit einer Sekundär-Steuerschleife zum Empfang eines Signals von Sekundär-Abnahmewandler (20), welches die Drehung anzeigt und das Signal dem Sekundär-Antriebswandler (16) zuführt, um es auf Null zu setzen, dadurch gekennzeichnet, daß ein Temperatursensor (52) vorgesehen ist, um eine Betriebstemperatur des Zylinders zu messen und ein Betriebstemperatur-Signal (To) zu erzeugen, daß ein Steuergerät (50, 50a) das Betriebstemperatur-Signal und das Resonanzfrequenz-Signal vom Primär-Abnahmewandler (18) empfängt und ein Bezugssignal (Vref) einstellt und daß eine Verstärker-Steuerschaltung (40, 42) das Bezugssignal (Vref) empfängt und entweder das Primär-Abnahmesignal oder das Primär-Antriebssignal auf einem Wert hält, der das Bezugssignal (Vref) definiert, um die Parameteränderungen in dem piezoelektrischen Material des Zylinders zu kompensieren.

2. Drehzahlsensor-Aufbau nach Anspruch 1, bei welchem das piezoelektrische Material des Zylinders Blei-Zirkonat-Titanat (PZT) ist und bei welchem die Parameteränderungen, die kompensiert werden sollen, eine Alterung umfassen.

3. Drehzahlsensor-Aufbau nach Anspruch 1 oder 2, bei welchem der Verstärkersteuerkreis (40) in der Primär-Steuerschleife (22) angeordnet ist und dieser Verstärkersteuerkreis (40) eine Verstärkersteuer-Einrichtung (42) und ein Amplituden-Steuergerät (44) umfaßt, die die Amplitude des Primär-Abnahmesignals mit einer Bezugsspannung (Vref) vergleichen und ein Korrektursignal (CS) der Verstärkersteuer-Einrichtung (42) zuführen.

4. Drehzahlsensor-Aufbau nach Anspruch 3, bei welchem das Steuergerät (50) das Betriebstemperatur-Signal (To) empfängt und die Resonanzfrequenz des Zylinders (12) überwacht und diese benutzt, um eine Kompensation der Bezugsamplitude der Primär-Abnahmeamplitude mit offener Schleife zu bewirken.

5. Drehzahlsensor-Aufbau nach Anspruch 4, bei welchem das Steuergerät (50) einen Frequenzdifferenzmesser (56) aufweist, der eine Ausgangsspannung V2 liefert, die proportional zur Differenz zwischen der Zylinderfrequenz und dem ursprünglich eingestellten Wert der Zylinderfrequenz bei Umgebungstemperatur ist.

6. Drehzahlsensor-Aufbau nach Anspruch 1 oder 2, bei welchem die Verstärkersteuer-Einrichtung (42) in der Primär-Steuerschleife (22) liegt und das Steuergerät (50a) zwischen den Temperatursensor (52) und die Verstärkersteuer-Einrichtung (42) geschaltet ist, wobei das Steuergerät (50a) die Resonanzfrequenz des Zylinders (12) überwacht und die Eingangs-Antriebsamplitude unter Bezugnahme auf Frequenz und Temperatur einstellt.

7. Drehzahlsensor-Aufbau nach einem der Ansprüche 1 bis 6, bei welchem die Primär-Steuerschleife (22) eine phasenstarre Schleife (PLL) aufweist, die einen Phasendetektor (30), der in Gegenphase arbeitet, ein Tiefpaßfilter (32) und einen spannungsgesteuerten Oszillator (34) enthält.

8. Verfahren zur Kompensation von Parameteränderungen in einem piezoelektrischen Material, welches wenigstens einen Teil eines Zylinders (12) eines Drehzahlsensor-Aufbaus (10) bildet, um die Drehbewegung um eine Achse (X) zu erfassen, auf welcher der Zylinder (12) angeordnet ist, gekennzeichnet durch die folgenden Stufen: es wird die Betriebstemperatur (To) des Zylinders (12) festgestellt; es wird die Resonanzfrequenz (B) des Zylinders (12) festgestellt; es werden die gemessene Temperatur (To) und die Frequenz (B) einem Steuergerät (50, 50a) zugeführt; es wird ein Bezugssignal (Vref) eingestellt und es wird entweder ein Primär-Abnahmesignal oder ein Primär-Antriebssignal auf einem Wert gehalten, der durch das Bezugssignal (Vref) definiert ist, um die Parameteränderungen zu kompensieren.

9. Verfahren nach Anspruch 8, bei welchem das Steuergerät (50a) eine Kompensation der Bezugsamplitude der Primär-Abnahmeamplitude mit offener Schleife liefert.

10. Verfahren nach Anspruch 8, bei welchem das Steuergerät (50a) die Eingangs-Antriebsamplitude des Zylinders (12) durch Bezugnahme auf die Frequenz (B) und die Temperatur (To) einstellt.

## Revendications

1. Ensemble de capteur de vitesse de rotation destiné à détecter un mouvement de rotation autour d'un axe (X) comprenant un cylindre (12) incorporant un matériau piézoélectrique, lequel cylindre est positionné autour dudit axe, des transducteurs d'attaque primaire et secondaire (14, 16) destinés à appliquer des vibrations radiales audit cylindre (12), des transducteurs de mesure primaire et secondaire (18, 20) destinés à détecter la présence de vibrations induites dans ledit cylindre, une boucle de commande primaire destinée à recevoir un signal provenant du transducteur de mesure primaire (18) et à entretenir la résonance en générant un déphasage à quatre-vingt-dix degrés entre le transducteur d'attaque primaire (14) et le transducteur de mesure primaire (18), et une boucle de commande secondaire destinée à recevoir un signal provenant du transducteur de mesure secondaire (20) indicatif de la rotation de celui-ci, et destiné à diriger ledit signal vers le transducteur d'attaque secondaire (16) de façon à le faire revenir à zéro, caractérisé en ce qu'il comprend un capteur de température (52) destiné à détecter une température de fonctionnement du cylindre et à générer un signal de température de fonctionnement (To), un contrôleur (50, 50a) pouvant être mis en oeuvre pour recevoir le signal de température de fonctionnement et le signal de fréquence de résonance à partir du transducteur de mesure primaire (18), et ajuster un signal de référence (Vref) et un circuit de commande de gain (40, 42) pouvant être mis en oeuvre pour recevoir le signal de référence (Vref) et maintenir soit le signal de mesure primaire, soit le signal d'attaque primaire, à une valeur définie par le signal de référence (Vref) afin de compenser les variations des paramètres du matériau piézoélectrique du cylindre.

2. Ensemble de capteur de vitesse de rotation selon la revendication 1, dans lequel le matériau piézoélectrique du cylindre est du titanate zirconate de plomb (PZT) et dans lequel les variations des paramètres devant être compensées comprennent le vieillissement.

3. Ensemble de capteur de vitesse de rotation selon la revendication 1 ou la revendication 2, dans lequel le circuit de commande de gain (40) est situé dans la boucle de commande primaire (22), lequel circuit de commande de gain (40) comprend un dispositif de commande de gain (42) et un contrôleur d'amplitude (44) pouvant être mis en oeuvre pour comparer l'amplitude du signal de mesure primaire à une tension de référence ($V_{ref}$) et appliquer un signal de correction (CS) au dispositif de commande de gain (42).

4. Ensemble de capteur de vitesse de rotation selon la revendication 3, dans lequel le contrôleur (50) peut être mis en oeuvre pour recevoir le signal de température de fonctionnement (To) et pour surveiller la fréquence de résonance du cylindre (12), et les utiliser pour permettre une compensation en boucle ouverte de l'amplitude de référence pour l'amplitude de mesure primaire.

5. Ensemble de capteur de vitesse de rotation selon la revendication 4, dans lequel le contrôleur (50) comprend un dispositif de mesure de différence de fréquence (56) pouvant être mis en oeuvre pour fournir une tension de sortie V2 proportionnelle à la différence entre la fréquence du cylindre et la valeur réglée à l'origine de la fréquence du cylindre à température ambiante.

6. Ensemble de capteur de vitesse de rotation selon la revendication 1 ou la revendication 2, dans lequel le dispositif de commande de gain (42) est situé dans la boucle de commande primaire (22), et dans lequel le contrôleur (50a) est relié entre le capteur de température (52) et le dispositif de commande de gain (42), lequel contrôleur (50a) peut être mis en oeuvre pour surveiller la fréquence de résonance du cylindre 12 et ajuster l'amplitude d'attaque d'entrée par référence à la fréquence et à la température.

7. Ensemble de capteur de vitesse de rotation selon l'une quelconque des revendications 1 à 6, dans lequel la boucle de commande primaire (22) comprend une boucle à verrouillage de phase (PLL) comportant un détecteur de phase (30) configuré pour fonctionner en quadrature, un filtre passe-bas (32) et un oscillateur commandé en tension (34).

8. Procédé de compensation des variations des paramètres dans un matériau piézoélectrique faisant au moins partie d'un cylindre (12) d'un ensemble de capteur de vitesse de rotation (10) destiné à détecter un mouvement de rotation autour d'un axe (X) sur lequel le cylindre (12) est positionné, caractérisé en ce qu'il comprend les étapes consistant à détecter la température de fonctionnement (To) du cylindre (12), détecter la fréquence de résonance (B) du cylindre (12), délivrer la température mesurée (To) et la fréquence (B) à un contrôleur (50, 50a), ajuster un signal de référence (Vref), et maintenir soit un signal de mesure primaire, soit un signal d'attaque primaire à une valeur définie par le signal de référence (Vref) afin de compenser lesdites variations des paramètres.

9. Procédé selon la revendication 8, dans lequel le contrôleur (50a) permet une compensation en boucle ouverte de l'amplitude de référence pour l'amplitude de mesure primaire.

10. Procédé selon la revendication 8, dans lequel le contrôleur (50a) ajuste l'amplitude d'attaque d'entrée vers le cylindre (12) par référence à la fréquence (B) et à la température (To).

Fig. 1

Fig. 2

Fig. 3

Fig. 4

Fig.5.

EP 0 592 171 B1

# Fig. 6

EP 0 592 171 B1

*Fig. 7*

EP 0 592 171 B1

# Fig. 8

*Fig. 9*